# EUROPEAN PATENT SPECIFICATION

(11) **EP 4 301 887 B1**
(45) Date of publication and mention of the grant of the patent: **02.12.2026**
(21) Application number: 22709316.8
(22) Date of filing: 02.03.2022
(51) Int. Cl.: C22B 1/00, C22B 26/22, C01F 5/06, C01F 5/24, C21C 5/54, C22B 1/242, C22B 1/244

(54) **METHOD FOR RECYCLING WASTE MATERIALS GENERATED IN A STAINLESS STEEL MAKING PROCESS IN A STAINLESS STEEL MILL**
VERFAHREN ZUR WIEDERVERWERTUNG VON ABFALLSTOFFEN, DIE IN EINEM EDELSTAHLHERSTELLUNGSVERFAHREN IN EINEM EDELSTAHLWALZWERK ERZEUGT WURDEN
PROCÉDÉ DE RECYCLAGE DE DÉCHETS GÉNÉRÉS DANS UN PROCÉDÉ DE FABRICATION D'ACIER INOXYDABLE DANS UNE INSTALLATION DE FABRICATION D'ACIER INOXYDABLE

(30) Priority: 04.03.2021 BE 202105167
(43) Date of publication of application: 10.01.2024
(73) Proprietor: ORBIX SOLUTIONS, 6240 Farciennes (BE)
(72) Inventor: VAN MECHELEN, Dirk, 2830 Tisselt (BE); COENEN, Nico, 3511 Kuringen (BE)
(74) Representative: Gevers Patents
(86) International application number: PCT/EP2022/055227
(87) International publication number: WO 2022/184756

(56) References cited:
- GB-A- 2 529 874
- JP-A- 2005 058 835
- US-A- 5 397 379
- US-A1- 2018 187 276

## Description

The present invention relates to a method for recycling waste material generated in a stainless steelmaking process in a stainless steel mill. The steelmaking process as disclosed in appended claims 1-14.

The stainless steel making process generates a substantial amount of wastes or by-products. It is generally accepted that the production of three tonnes of stainless steel generates one tonne of stainless steel waste/by-products. Due to the high amount of wastes generated and with evident concern on the environmental and economic impact of such wastes, recycling waste materials has been a longstanding issue in the stainless steel industry. Most of the waste materials are already recycled however some of them still need to be landfilled.

Waste materials generated in a stainless steelmaking process can be divided into several categories which are each separately collected. Charging slag formers in furnaces and vessels is a prerequisite during the steelmaking process. They are usually added so as to create a layer of slag floating on the melt so as to protect the melt for oxidation. Additionally, the slag also acts as thermal blanket, reducing heating losses, and helps protect the refractory lining. Finally, the slag is used to remove contaminants from the stainless steel melt such as dirt present in the scrap metal. The resulting solid slag is treated as a waste material, which may for example be recycled by recovering the metal fraction, i.e. the stainless steel fraction, and by converting the non-metal fraction, i.e. the mineral fraction, to high-value construction materials. The construction materials include for example coarse and fine aggregates, and even finer fillers, for the production of concrete or asphalt. The fines generated during the recovery of the metal fraction and the production of the aggregates can moreover be used as binders which can be cured with carbon dioxide. These binders can be used to replace cement. Instead of causing carbon dioxide emissions, they sequester carbon dioxide.

The high temperature of stainless steelmaking processes in the different furnaces also inevitably leads to the formation of fumes along with generation of dusts entrained by said fumes. To limit the emission of such dusts into the atmosphere, they are captured in a filter bags. The dust material collected in the filter bags is a very fine material. This so-called filter dust contains a lot of metal oxides, including mainly iron oxide but also chromium oxide, zinc oxide, nickel oxide, manganese oxide and aluminium oxide. The filter dust can be recycled to the stainless steel furnace wherein these oxides can be reduced to produce the corresponding metals.

Efforts have thus been made to recycle the above-mentioned wastes or by-products. Most of them can be effectively recycled. However, there are still waste materials generated during the production of stainless steel which cannot be recycled or at least not to a great extent.

A first waste material comprises dismantled refractory lining materials. Although slag formers intervene in protecting the stainless steel facilities, the high temperature and mechanical stress in the furnaces and vessels inevitably leads to worn out of their refractory linings. The refractory linings therefore need to be dismantled and replaced periodically. The largest pieces of the spent refractory lining can be reused in the production of new refractory bricks, for example pieces larger than 60 mm. The smaller pieces, on the contrary, cannot be reused to manufacture new refractory bricks. Also a portion of the largest pieces may not be suited for being reused as refractory bricks. They are preferably crushed and/or milled into smaller pieces. Since all of these smaller pieces are polluted with heavy metals such as chromium, nickel and molybdenum, they presently need to be landfilled under strict controlled conditions.

In a carbon steelmaking mill, wherein electric arc furnaces (EAF) are used to produce directly reduced iron (DRI), refractory materials are sometimes recycled by reintroducing them as a slag former in the EAF. Reference can be made for example to the article *"*Recycling MgO-C refractory in the EAF of IMEXSA" by R. G. Lule et al. It is clear from this article that the possibility of adding refractory material to the EAF depends on whether it does not disturb the slag chemistry. The basicity and the viscosity of the slag are for example important for the required foaming properties of the EAF slag. In the production of common steel, i.e. carbon steel, the EAF slag has a high iron oxide content. This has not only an important effect on the viscosity of the slag but also on the saturation level of magnesium oxide in the slag. Moreover, due to the higher carbon content of carbon steel compared to stainless steel, higher amounts of carbon and oxygen can be used in carbon steel furnaces compared to stainless steel furnaces thus generating more heat and enabling to use slag formers having a higher carbon content. As to the particle size of the recycled refractory materials crushing of the refractory material to a particle size of less than 3 mm is described in this article as an important operation to achieve an efficient recycling process. Notwithstanding the relatively small particle size, there were no significant problems with losses by the fume extraction system because charging could be conducted in the same stream as for DRI, thus, DRI forced the refractory to penetrate into the slag.

In the article *"*Value Creation of Dolime compared to MgO Alternatives for EAF Application" of M. Nispel et al. the use of different MgO sources for producing a foaming EAF slag is described as well as the advantages or disadvantages of these different MgO sources. One of the MgO sources is recycled MgO from refractory bricks. The refractory material is milled, mixed with binders and other additives and is compacted. Cement is often used to achieve enough physical strength to withstand transport and handling. A drawback of cement is however that it increases the level of impurities such as SiO₂ in the slag. Another drawback of the recycled refractory material is the low dissolution rate of the sintered and fused MgO which is contained therein. Reference was made to the article *"*Evaluation of Dissolution Rate and Behavior of MfO Carriers for Primary and Secondary Metallurgical Slags" of E. Cheremisina et al. describing experiments which show that caustic magnesia, burnt dolomite and raw magnesite dissolve completely within a short period of time whilst sintered and fused magnesia require longer time to dissolve, since many unreacted periclase particles were observed (starting from MgO samples having grain sizes between 1 and 1.6 mm). As a result, M. Nispel et al. took only 10% of the theoretically possible refractory wear improvements that can normally be achieved by the MgO source into account. Moreover, only 1% of energy saving was taken into account whereas the other MgO sources provided an energy saving of 3%. The authors thus concluded that MgO recycled from spent refractory bricks resulted in a negative potential added value unless the EAF plant would suffer from high spent refractory disposal costs.

Other MgO sources described in this article are engineered MgO briquettes and engineered MgO-C briquettes. In contrast to the recycled refractory material they have a positive potential added value since the MgO or MgO-C is apparently not dead burnt. An important disadvantage is however their high LOI (Loss On Ignition) value. They have in particular an LOI value of respectively 25 and 35 wt.%, which has a negative impact on the energy balance. The high LOI value seems to be due to the presence of the binder in the engineered briquettes and to the presence of the carbon in the MgO-C briquettes.

The chemistry of the EAF slag of stainless steel is substantially different than the EAF slag of common steel which is described in these prior art articles. It has a lower basicity and above all it has a much lower content of iron oxide. An important difference between spent refractories from carbon steel production and spent refractories from stainless steel production is moreover that the latter contain chromium oxide, in particular a few percent of chromium oxide, whilst spent refractories from carbon steel production are free of chromium (apart from refractory bricks which would be chromium based). In addition to at least 10 wt.% of chromium, stainless steel may moreover contain nickel and molybdenum and other toxic heavy metals. Due to the presence of these heavy metals in the spent refractories of stainless steelmaking vessels, these spent refractories cannot be recycled to an EAF of a carbon steel mill. In practice, a large amount of the spent refractories generated in stainless steel mills thus need to be landfilled.

Another waste material, which is generated in even larger amounts in a stainless steel mill, are the particulate materials which arrive on the floor of the steel mill and which are periodically gathered in the form of a particulate mixed waste material. This mixed waste material contains different materials which are used or produced in the steelmaking process. They may comprise for example different slag formers, different slag materials, stainless steel particles, particles or dust of refractory linings, etc. They can be spilled on the floor when tapping liquid steel or liquid slag into a ladle or when skimming liquid slag from a ladle. Slag formers may also be blown out of the furnace or casting ladle when charging the slag formers in the hot, open furnace or ladle. Also when dismantling furnaces and ladles a lot of dust is generated which may arrive onto the floor together with any refractory fines left thereon when removing the dismantled refractory lining by means of a bulldozer. This swept mixed waste material has currently still to be landfilled. It contains indeed also heavy metals so that it can for example not be used as soil conditioner. Patent documents US 2018/187276 A1, US 5 397 379 A and GB 2 529 874 A further disclose a method for recycling waste materials generated in a stainless steel making process in a stainless steel mill.

An object of the present invention is therefore to provide a new method which enables to recycle, in a more advantageous way, waste material which is generated in a stainless steel mill and which comprises at least some of the finer aggregate fractions of the dismantled refractories and optionally a portion of the particulate mixed waste material gathered from the floor of the stainless steel mill.

To this end, the method according to the present invention is characterized in that said aggregate fractions comprise at least one calcium/magnesium aggregate fraction, which contains a magnesium oxide - calcium oxide based refractory lining material. The method comprises further the steps of:
- producing a granular material with at least a portion of said calcium/magnesium aggregate fraction;
- agglomerating said granular material into larger pieces; and
- introducing said larger pieces as one of said EAF slag formers into said electric arc furnace and/or as one of said OD slag formers into said refining vessel.
According to the invention, at least a portion of the calcium oxide present in said magnesium oxide - calcium oxide based refractory lining material is hydrated to provide calcium hydroxide in the granular material and said larger pieces containing said granular material are hardened before introducing them into said electric arc furnace or in said refining vessel by carbonating at least a portion of the calcium hydroxide contained therein. The electric arc furnace and the refining vessel are both referred to hereinafter as steel furnaces.

In the method according to the present invention, the waste material is agglomerated into larger pieces, i.e. into pieces which are larger than the particles of the waste material, so that the waste material can be charged easily, for example by means of a conveyor, into the steel furnace (EAF or AOD or VOD). Delicate and costly powder injection systems are thus not required and large amounts of slag formers can be charged easily and quickly into the steel furnace.

The calcium/magnesium aggregate fraction of the dismantled refractory linings can be used as one of the EAF or OD slag formers provided it is brought in the form of a granular material which is agglomerated into larger pieces. In the steel furnace (EAF or refining vessel), these pieces fall apart again into the fine particles of the granular material which, in contrast to the original refractory lining bricks, can be molten or dissolved sufficiently quickly in the steel furnace. The carbonates holding the fine particles of the granular material together in the larger pieces are indeed quickly decomposed in the steel furnace. Moreover, since especially part of the calcium oxides are hydrated in the magnesium oxide - calcium oxide based refractory lining material, also the particles of this refractory lining material itself dissolve more quickly in the liquid EAF or OD slag. The hydroxides will indeed also decompose quickly in the steel furnace thus making the refractory particles more porous so that the liquid slag can penetrate more quickly into these particles. The calcium/magnesium aggregate fraction has also a relatively high magnesium content so that it can also be used to replace at least part of the dolime which is presently used as one of the EAF and OD slag formers. Preferably, the larger pieces produced in the method according to the present invention have an MgO content of at least 30 wt.%, preferably of at least 35 wt.% and more preferably of at least 37.5 wt.%.

The calcium/magnesium aggregate fraction of the dismantled refractory linings initially contain magnesium oxide (MgO) and calcium oxide (CaO). Due to the high temperatures in the steel furnace, both the MgO and the CaO are dead burnt. In accordance with the present invention it has been found that the MgO is very difficult to hydrate with water whilst the CaO in the refractory material is relatively easy to hydrate. It has also been found that due to the presence of the hydrated CaO, in other words due to the presence of calcium hydroxide (Ca(OH)₂) in the partially hydrated refractory lining material, the agglomerated pieces of the granular material gain quickly strength when storing/drying them for a relatively short period of time, namely for one or a few days. It was found that during this storage, carbonates are produced both from the Ca(OH)₂ and also from the Mg(OH)₂ which has been produced in the granular material although to a lesser degree than the Ca(OH)₂. The increased compressive strength of the larger pieces after storage/drying is thus at least partially due to the carbonation of some of the Ca(OH)₂ and of the Mg(OH)₂ contained therein. This carbonation maybe achieved by natural carbonation, i.e. with normal/standard air, or by accelerated carbonation with air which is enriched with carbon dioxide.

Indeed, it was found that only a small amount of carbonates need to be produced to achieve a sufficiently high compressing strength. Preferably, after having agglomerated the granular material into said larger pieces, at least 0.2 wt.%, preferably at least 0.4 wt.% of carbonates (based on the total weight of the carbonate compounds) are formed in the larger pieces before they are introduced in the electric arc furnace. The carbonates include in particular calcium carbonates and magnesium carbonates and calcium-magnesium carbonates (dolomite).

The LOI of the larger pieces can thus be kept to a minimum. Moreover, in contrast to larger pieces which have been produced by a sintering process (as disclosed for example in the article *"*Dissolution Rate of Burnt Dolomite in Molten FetO-CaO-SiO2 Slags" of M. Umakoshi et al.), the larger pieces quickly fall apart into the fine particles of the granular material when being introduced in the steel furnace. Indeed, due to the high temperatures in the steel furnace, the carbonates quickly decompose and the agitation in the liquid slag, and the penetration of liquid slag into the larger pieces, quickly disintegrates them into the particles of the granular material. Due to the small size of these particles, they quickly dissolve in the liquid slag and provide for an immediate protection of the refractory lining and for an optimal saving of energy.

In an embodiment of the method according to the present invention, said granular material is agglomerated into said larger pieces without adding a binder thereto.

An advantage of not using a binder is that no further undesired materials are added to the EAF such as cement which introduces silicates (silicon dioxide) in the EAF or organic binders which increase the LOI of the slag former and which introduce carbon in the EAF, which may thus increase the carbon content of the stainless steel.

In an embodiment of the method according to the present invention, or according to the preceding embodiment, said step of producing said granular material comprises the step of disintegrating said calcium/magnesium aggregate fraction by treating it with water.

It has been found that the calcium/magnesium aggregate fraction of the refractory lining material swells when being brought in contact with water and can fall apart into relatively small particles, in particular in particles smaller than 2.0 mm, or even in particles smaller than 1.0 mm. This was found to be especially the case for magnesium oxide - calcium oxide based refractory lining materials. The swelling can be explained by the hydration of the calcium oxide and to a lesser extent by any hydration of the magnesium oxide contained in the MgO/CaO based refractory lining material. In this embodiment, the smaller particle size of the granular material can thus be obtained without necessarily having to mill the material.

In an embodiment of the method according to the present invention, or according to any one of the preceding embodiments, said step of producing said granular material comprises the step of crushing or milling said calcium/magnesium aggregate fraction.

Reducing the particle size of the aggregate fraction enables to recycle more metal particles from this aggregate fraction. Moreover, the aggregate fraction can be agglomerated more easily into said larger pieces. In the steel furnace these larger pieces will fall apart into smaller particles which will dissolve more quickly and more completely into the liquid slag. Milling or crushing the calcium/magnesium aggregate fraction also mechanically activates the calcium and magnesium oxides so that they are hydrated more quickly.

In an embodiment of the method according to the present invention, or according to any one of the preceding embodiments, said granular material has a D₅₀ value (median particle size measured in accordance with ASTM D6913/D6913M-17) smaller than 0.5 mm, preferably smaller than 0.25 mm, more preferably smaller than 0.125 mm and most preferably smaller than 0.063 mm.

It has been found that using a waste material which has been milled to o a finer particle size it is easier to press the material into sufficiently strong pieces without having to use a binder. Moreover, a smaller particle size increases the melting or dissolution speed of the refractory particles in the steel furnace. The sooner the waste material is liquefied in the steel furnace, in particular in the EAF, the sooner the metal is covered with liquid slag and the sooner the refractory liner is protected against the electric arcs produced in the EAF and energy savings are achieved.

In an embodiment of the method according to the present invention, or according to any one of the preceding embodiments, said granular material has a D₅₀ value larger than 15 µm, preferably larger than 20 µm and more preferably larger than 0.25 µm.

The particle size of the granular material is preferably not too small since fines dusts are more difficult to agglomerate into sufficiently strong larger pieces.

In an embodiment of the method according to the present invention, or according to any one of the preceding embodiments, when agglomerating said granular material it has a moisture content of at least 2.0 wt.%, preferably at least 4.0 wt.%, more preferably at least 6.0 wt.% and most preferably at least 8.0 wt.%. This moisture content is moreover preferably less than 25.0 wt.%, preferably less than 20.0 wt.%, more preferably less than 18.0 wt.% and most preferably less than 15.0 wt.%.

Such moisture contents enable to agglomerate the waste material into stronger pieces without having to use a binder. In particular a higher green strength can be achieved, i.e. a strength which is obtained immediately after the agglomeration step. Preferably, the moisture content is first determined as the moisture content which provides the highest proctor density, i.e. the highest density in the proctor test.

In an embodiment of the method according to the present invention, or according to any one of the preceding embodiments, after having agglomerated the granular material into said larger pieces, the larger pieces are allowed to dry in air which is optionally enriched with carbon dioxide.

When drying in air, which may but which does not have to be enriched with carbon dioxide, a portion of the hydroxides contained in the larger pieces are carbonated. Only a relatively small portion of the hydroxides need to be carbonated to achieve the required strength. Such carbonation can already be achieved with air as such, i.e. by a natural carbonation process, but a carbonation with air enriched with carbon dioxide, i.e. an accelerated carbonation, is also possible. It has been found that upon drying calcium accumulates at the surface of the larger pieces and forms there a calcium carbonate rich layer. Within the core of the larger pieces much less calcium carbonate is formed. An advantage of the higher calcium carbonate content on the outer side of the larger pieces is that the strength of the larger pieces can be increased considerably with a minimum amount of calcium carbonate. The presence of large amounts of carbonates are indeed not desired in the EAF or OD slag formers since they increase the energy consumption (and the CO₂ production) of the steel furnace. The larger pieces were found to dry relatively easy and quickly, which may be due to the fact that, as a result of the small particle size, they have a quite large porosity. Moreover, dead burnt oxides as such have a relatively small water absorption capacity. The larger pieces thus dry quite quickly, the calcium hydroxide rich aqueous solutions moves to the surface and evaporates there leaving the calcium carbonates which are quickly formed on the surface and which quickly increase the strength of the larger pieces.

In an embodiment of the method according to the present invention, or according to any one of the preceding embodiments, when being introduced in the steel furnace said larger pieces have a moisture content smaller than 5.0 wt.%, preferably smaller than 4.0 wt.% and more preferably smaller than 3.0 wt.%.

The larger pieces were found to dry with a minimum amount of energy. Low water contents are preferred so that less water needs to be evaporated in the steel furnace thus reducing the amount of energy which has to be supplied to the steel furnace.

In an embodiment of the method according to the present invention, or according to any one of the preceding embodiments, said larger pieces are made by granulating said granular material.

By granulating the larger pieces, they can be produced quite easily and cheaply. No high compaction pressures need to be exerted onto the pieces and they can be produced at a relatively high speed. In the method according to the present invention the grains of the granulated material gain enough strength by the carbonation step.

In an alternative embodiment of the method according to the present invention, or according to any one of the preceding embodiments, said larger pieces are made by briquetting said granular material.

An advantage of the briquetting process is that by the higher compaction pressures which can be applied to produce the larger pieces, the briquettes immediately have a sufficiently high green strength. No binder, in particular no carbon or silicates, thus needs to be introduced into the steel furnace.

Preferably, said larger pieces are briquetted with a compaction pressure of at least 3.0 MPa, preferably at least 4.0 MPa and more preferably at least 5.0 MPa, said compaction pressure being preferably smaller than 10.0 MPa, more preferably smaller than 9.0 MPa.

It has been found that with such compaction pressures, the strongest pieces can be produced.

In an embodiment of the method according to the present invention, or according to any one of the preceding embodiments, said granular material is produced with said portion of the calcium/magnesium aggregate fraction and with at least a portion of said particulate mixed waste material.

The non-metal fraction of the particulate mixed waste material collected from the floor of the stainless steel mill has a silicon dioxide content which is much lower than the silicon content of the different stainless steel slags. Moreover, it has a relatively high magnesium oxide content and also a high calcium oxide content. It was found that due to these properties it could be used, in combination with the calcium/magnesium aggregate fraction of the recycled refractory lining material, to replace at least part of the dolime (mixture of calcium oxide and magnesium oxide) which is nowadays used as one of the EAF or OD slag formers. In this way, important costs for landfilling the mixed waste material can be saved. Also natural resources in particular dolomite can be saved. Finally, the carbon dioxide emissions caused by the required burning of dolomite can be reduced.

A low silicon dioxide content appeared to be essential for being able to use the mixed waste material and the spent refractory material as an EAF or OD slag former. During the stainless steelmaking process, the silicon content of the molten steel is reduced by oxidising the silicon and by collecting the produced silicon dioxide in the slag. In an EAF and also in an AOD (or VOD) the basicity of the slag, i.e. the CaO/SiO₂ ratio, is an important parameter which has to be kept within tight limits, for example in view of the required foaming properties of the EAF slag and in view of keeping the amount of slag to a minimum. It has however been found that, due to the relatively low silicon dioxide content of the mixed waste material and of the spent refractory material both materials can be used as EAF slag former without reducing the basicity of the liquid slag to a too large extent. The higher the calcium and magnesium oxide content of the waste material, the less quicklime and/or dolime has to be used as EAF or OD slag formers and thus the more of the waste material can be used.

In an embodiment of the method according to the preceding embodiment, the non-metal fraction of the mixed waste material has a silicon dioxide content of between 1.0 and 25.0 wt.%, and preferably a silicon dioxide content which is smaller than 20.0 wt.% and more preferably smaller than 15.0 wt.% or even smaller than 10.0 wt.%.

These silicon dioxide contents are smaller than the silicon dioxide content of the EAF or OD slag at the end of the melting/refining process in the EAF or AOD (VOD). The non-metal fraction can thus take up additional oxidized silicon from the molten stainless steel. The lower the silicon dioxide content of the non-metal fraction, the larger the amount of dolime which can be substituted by the non-metal fraction.

In an embodiment of the method according to any one of the preceding embodiments wherein the granular material is produced from a combination of the calcium/magnesium aggregate fraction and the particulate mixed waste material, the non-metal fraction of the mixed waste material has a magnesium oxide content larger than 5.0 wt.%, preferably larger than 7.5 wt.% and more preferably larger than 10.0 wt.% and a calcium oxide content larger than 15.0 wt.%, preferably larger than 20.0 wt.% and more preferably larger than 25.0 wt.%.

In the present specification and claims, the calcium oxide content refers to the total amount of calcium expressed as calcium oxide and the magnesium oxide content refers to the total amount of magnesium expressed as magnesium oxide. The magnesium oxide contained in the mixed waste material is a valuable compound since magnesium oxide is required in the steel furnace, in particular in the EAF, to decrease the degradation of the refractory lining. In a stainless steel EAF, the magnesium oxide content in the liquid slag should be adjusted preferably to a content of between 10.0 and 12.0 wt.%. Also the calcium oxide content in the mixed waste material is a valuable compound since it increases the basicity of the slag and can be used to replace dolime and/or quicklime. Moreover, it can also be hydrated to produce calcium hydroxide which can be carbonated to increase the strength of the larger pieces produced from the granular material.

In an embodiment of the method according to any one of the preceding embodiments wherein the granular material is produced from a combination of the calcium/magnesium aggregate fraction and the particulate mixed waste material, the non-metal fraction of the mixed waste material has a magnesium oxide and calcium oxide content larger than 45.0 wt.%, preferably larger than 50.0 wt.% and more preferably larger than 55.0 wt.%.

Calcium oxide is the main component of the liquid slag in a steel furnace. It is essential to keep the basicity of the slag sufficiently high. The CaO/SiO₂ ratio of the EAF slag should be kept in particular higher than 1.2 whilst the basicity in an AOD should even be higher. Such a high basicity of the slag is for example important to achieve a good foaming of the slag in the EAF. Magnesium oxide is also a basic component of the slag which has an effect on the viscosity and thus on the foaming thereof.

In an embodiment of the method according to any one of the preceding embodiments wherein the granular material is produced from a combination of the calcium/magnesium aggregate fraction and the particulate mixed waste material, the non-metal fraction of the mixed waste material has an iron oxide content smaller than 20.0 wt.%, preferably smaller than 15.0 wt.% and more preferably smaller than 12.5 wt.%.

In contrast to the EAF slag in a carbon steelmaking process, the liquid slag in a stainless steelmaking EAF contains much less iron oxide, in particular at most a few percent. The mixed waste material should therefore contain no or only a relatively small amount of iron oxide, especially since iron oxide lowers the viscosity of the slag and thus modifies the foaming properties thereof. More iron oxide also increases the amount of slag and thus also the amount of energy required to melt the slag materials.

In an embodiment of the method according to any one of the preceding embodiments wherein the granular material is produced from a combination of the calcium/magnesium aggregate fraction and the particulate mixed waste material, the non-metal fraction of the mixed waste material has a chromium oxide content larger than 1.0 wt.%, preferably larger than 2.0 wt.%.

The chromium oxide content is a clear indication that the mixed waste material is produced in a stainless steelmaking process. Mixed waste materials having such a high chromium oxide content are highly polluting and are thus preferably recycled in accordance with the method according to the present invention. Moreover, some of the chromium oxide may be reduced again in the steel furnace in particular when adding metallic silicon, such as ferrosilicon, to the steel furnace.

In an embodiment of the method according to any one of the preceding embodiments wherein the granular material is produced from a combination of the calcium/magnesium aggregate fraction and the particulate mixed waste material, at least part of said metal fraction is removed from the mixed waste material preferably after having milled the mixed waste material. The metal fraction can in particular be removed by a wet process in water .

By removing the metal fraction, the composition of the mixed waste material becomes more uniform as it no longer depends on the metal content thereof. Moreover, the metal fraction can be reused as such in the EAF so that the amount of scrap fed into the EAF, and especially the composition thereof, can also be controlled more easily. The metal fraction is preferably removed from the mixed waste fraction after having milled the mixed waste material. In this way, more and cleaner metal pieces or particles can be removed from the mixed waste material. Milling the mixed waste material is preferred since it also mechanically activates the calcium and magnesium oxides so that they are hydrated more quickly.

In the embodiments of the method according to any one of the preceding embodiments wherein the granular material is produced from a combination of the calcium/magnesium aggregate fraction and the particulate mixed waste material, one or more of said aggregate fractions of the dismantled refractory linings different from the calcium/magnesium aggregate fraction thereof can additionally be used. The aggregate fractions of the refractory linings have another chemical composition than the mixed waste material. Often they contain more magnesium oxide and less silicon dioxide. Mixing a portion of one or more of the refractory aggregate fraction with the mixed waste material enables thus to increase the magnesium content and lower the silicon dioxide content of the mixture so that more of the dolime can be replaced by this recycled mixture.

Also refractory lining materials from other origins, for example from common steel plants or from cement kilns, may additionally be used to produce the granular material. When these refractory lining materials are calcium oxide - magnesium oxide based, they can contribute to the hardening of the larger pieces.

An advantage of the method according to the present invention is that other powdery or fine grained materials may be included in the larger pieces. These materials can be granulated or briquetted in a mixture with the calcium/magnesium aggregate fraction which provides for the required strength of the granules/briquettes.

In practice, borates are for example nowadays often added to the liquid steel slag in order to avoid falling of the solidified slag, i.e. the formation of fine sand or dust instead of a valuable aggregated due to the expansion and cracking of the steel slag material as a result of the formation of gamma dicalcium silicate. Due to the fine nature of borates, injection thereof into the steel furnace is not always reliable. By including them into the larger pieces made in the method of the present invention, this problem is solved.

In an embodiment of the method according to the present invention, or according to any one of the preceding embodiments, said granular material is made with said portion of said calcium/magnesium aggregate fraction and with an aluminium rich material which contains metallic aluminium and/or trivalent aluminium, and which has preferably an aluminium content, expressed in percent by weight of Al2O3, of at least 40 wt.% Al2O3, preferably of at least 50 wt.% Al2O3 and more preferably of at least 60 wt.% Al2O3, said aluminium rich material preferably comprising aluminium dross and/or at least aluminium oxides and/or hydroxides recycled from aluminium dross.

The aluminium rich material can be granulated or briquetted in a mixture with the calcium/magnesium aggregate fraction which provides for the required strength of the granules/briquettes.

As described in EP 3 901 289 stainless steel slag can also be stabilized by means of aluminium. Aluminium can be added in the form of metallic aluminium or in the form of alumina. Metallic aluminium has a higher aluminium concentration than alumina but is generally more expensive. Aluminium dross or salt cakes could be used as a secondary aluminium source. In practice metallic aluminium and salt is already recycled from aluminium dross leaving a secondary product which is rich in aluminium oxide. Such a product is available on the market under the tradename Valoxy^{®}. This product comprises about 75 wt.% of alumina.

Even if the aluminium rich material comprises alumina in a form having a high melting point, it will melt in the steel furnace. Moreover, the aluminium will have its known advantageous effects.

Metallic aluminium is advantageous since it assists in reducing iron oxides and chromium. Moreover, oxidation of metallic aluminium produces extra heat. Notwithstanding the much higher melting point of trivalent aluminium compounds, in particular aluminium oxide or hydroxide, it is possible to dissolve such trivalent aluminium compounds in the slag on top of the molten steel due to the high temperature of the molten steel. Using aluminium dross, is advantageous since it is a by-product of the aluminium refining. The metallic aluminium, and the salts, are preferably first recycled from the aluminium dross but since metallic aluminium has advantageous effects on the steel, it does not have to be removed from the aluminium dross fraction which is added to the steel.

Preferably, said aluminium rich material contains metallic aluminium and preferably contains at least 60 wt.%, more preferably at least 70 wt.% and most preferably at least 80 wt.% of metallic aluminium, expressed as weight percent Al.

As mentioned already hereabove, metallic aluminium is advantageous since it assists in reducing iron oxides and chromium. Moreover, oxidation of metallic aluminium produces extra heat.

In the method according to the present invention, the granular material is preferably agglomerated into said larger pieces without adding a binder thereto. However, it is possible to add a binder, in particular a small amount thereof.

In an embodiment of the method according to the present invention, or according to any one of the preceding embodiments, a binder is added to said granular material before agglomerating it into said larger pieces. Preferably, said binder comprises cement, starch and/or a combination of molasses with lime.

The use of a binder enables to produce stronger larger pieces, especially when these pieces are made by a granulating process, for example in a granulating pan. The binder preferably comprises starch and/or molasses since, in contrast to cement, these binder materials do not contain silicates (silicon dioxide). A further advantage of the use of molasses and of starch is that they produce heat when oxygen is blown into the EAF.

The starch is preferably used in an amount of 3 to 8 wt.% (by dry weight), based on the total weight of the mixture (pieces).

In an embodiment of the method according to the present invention, or according to any one of the preceding embodiments, the different fractions wherein the dismantled refractory linings are separated include a further coarser aggregate fraction, at least a portion of which is introduced as one of said EAF or OD slag formers into said electric arc furnace or into said refining vessel. Preferably, said further aggregate fraction has a particle size larger than 5.0 mm, preferably larger than 7.5 mm and more preferably larger than 10.0 mm, but smaller than 100.0 mm, preferably smaller than 80.0 mm and more preferably smaller than 60.0 mm.

It has been found, that this further aggregate fraction, sieved out from the refractory lining material as produced by the dismantling step, is liquefied in the steel furnace after a period of time and can thus also contribute to the energy savings and to the protection of the refractory lining of the EAF although not right from the beginning.

The present invention also relates to an EAF or OD slag former consisting of said larger pieces which are produced in the method according to the invention.

The present invention moreover relates to a method for producing this EAF or OD slag former, wherein a granular material is produced with at least a portion of a calcium/magnesium aggregate fraction containing a dismantled magnesium oxide - calcium oxide based refractory lining material and wherein said granular material is granulated into larger pieces, in which method at least a portion of the calcium oxide present in said magnesium oxide - calcium oxide based refractory lining material is hydrated to provide calcium hydroxide in the granular material and said larger pieces containing said granular material are hardened by carbonating at least a portion of the calcium hydroxide contained therein.

Other advantages and particularities of the present invention will become apparent from the following description of some particular embodiments of the method for recycling waste materials generated in a stainless steelmaking process in a stainless steel mill, according to the invention. This description is only given by way of example and is not intended to limit the scope of the invention. The reference numerals used in the description relate to the annexed drawing wherein:

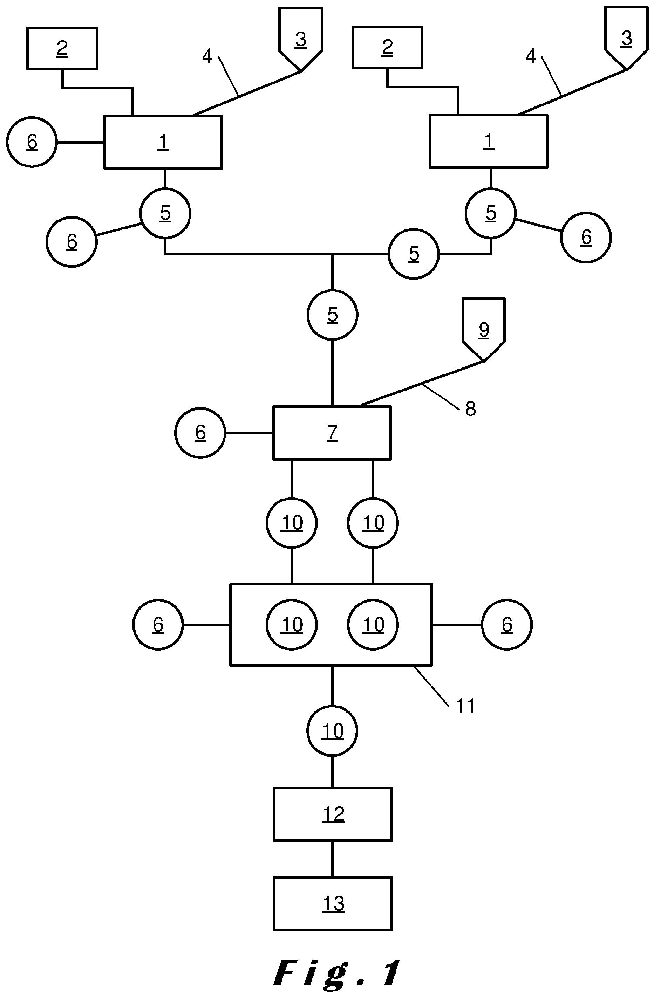

Figure 1 is a schematic diagram of an example of the functioning of a stainless steel mill generating waste material which can be recycled in accordance with the present invention.

In the present text, the term percent (%) and percent by weight (wt.%) refers to percent by dry weight unless indicated otherwise. Moreover, the moisture contents are expressed in percent by wet weight.

The present invention relates in general to a method for recycling waste material generated in a stainless steelmaking process in a stainless steel mill. The functioning of an example of such a stainless steel mill is illustrated schematically in Figure 1.

The stainless steel mill comprises one or more electric arc furnaces 1 (EAF's) which have a bottom, a wall and a removable lid. To start the stainless steel production the removable lid is removed from the EAF and an amount of stainless steel scrap is fed by means of a bridge unloader from a scrap bunker 2 in the EAF. Also alloying elements are charged into the EAF. The first load of scrap is molten by means of electric arcs produced by the electrodes in the EAF and the removable lid is removed again to charge further scrap into the EAF. The bottom, the wall and the removable lid of the EAF are all provided with a refractory lining which is constructed in situ of refractory bricks. To protect the refractory lining against the electric arcs, and to insulate the stainless steel melt, a layer of molten slag is formed on top of the steel melt. The molten slag needs to have a certain viscosity so that it can be converted into a foam by the carbon oxide produced by the reaction between the carbon which is still contained in the liquid steel or which is added to the furnace and the oxygen which is blown therein. The EAF slag formers are charged from one or more silos 3 by means of one or more conveyor belts 4 into the open EAF. Due to the strong convective air flows above the open EAF, the slag formers have to consist of larger pieces. They may for example be granular or in the form of briquettes. When charging the slag formers into the EAF and also during the steelmaking process in the EAF, a portion of the slag formers and of the liquid slag splashed out of the EAF and arrives around and underneath the EAF on the floor of the steel mill.

In and above the EAF's air is sucked away by means of ventilators. The dust which is removed in this way is collected in filters. Dust generated in the EAF and for example when charging the scrap and the slag formers in the EAF is thus captured. This dust contains a lot of metals and metal oxides which can be reduced to recycle the metals contained in the dust.

The stainless steel produced in the EAF's is tapped in transfer ladles 5. The liquid slag present on top of the steel melt is then poured out of the EAF into one of the slag pots 6. Some of the liquid slag also arrives in the transfer ladle 5. A portion thereof is skimmed or poured from the transfer ladle 5 into a bucket which is emptied into another one of the slag pots 6. During these manipulations of the liquid slag, a portion thereof is again spilled on the floor of the steel mill.

The steel melt is then transported by means of the transfer ladle 5 to a refining vessel 7. This can be a VOD furnace ("Vacuum Oxygen Decarburization" furnace), which mainly consist of a lid placed on top of the transfer ladle , but in practice the refining vessel is nowadays most often an AOD furnace ("Argon Oxygen Decarburization" furnace). The AOD furnace 7 consists of an outer vessel wherein a refractory lining, made of refractory bricks, is positioned. The refractory lining forms an inner vessel which is constructed outside of the AOD furnace 7 and which is positioned, as a whole, into the outer vessel.

Apart from the steel melt OD slag formers and additional alloying elements are charged into the AOD furnace 7. This is again done by means of conveyor belts 8 from silos 9. The slag in the AOD furnace 7 is not a foaming slag. It is only intended to take up impurities from the steel melt and to insulate the steel melt. The basicity of the slag, i.e. the CaO/SiO₂ ratio, of the AOD slag is usually much higher than the basicity of the EAF slag, for example about 1.6 to 1.7 instead of 1.2 to 1.3 for the EAF slag. In the AOD furnace the composition of the steel melt is further adjusted and the carbon content thereof is further reduced. Heat is generated by the oxidation of the carbon contained in the steel melt. Ferrosilicon may be added to reduce elements such as chromium so that less chromium oxide is lost via the slag material. Also metallic aluminium may be added to reduce chromium.

The liquid slag is first tapped from the AOD furnace, by tilting it, into one of the slag pots 6. Then the steel melt is tapped from the AOD furnace, by tilting it again, into one of the casting ladles 10. When charging the slag formers into the AOD and also during the steelmaking process in the AOD, the tapping of the liquid slag and the tapping of the steel melt, a portion of the slag and slag formers and of the steel melt arrives around and underneath the AOD on the floor of the steel mill.

The casting ladle 10 is transported to a finishing stand 11 where additional alloying elements are added to the casting ladle 10 to achieve the final stainless steel composition. Slag formers are also added to remove the final impurities. If the composition of the steel melt is not correct, the casting ladle 10 can be returned to the AOD furnace 7 for reprocessing the liquid steel. After the refining step in the finishing stand 11, the ladle slag is removed from the top of the casting ladles 10 and is poured into one of the slag pots 6. The ladle slag has also a relatively high basicity. Also during this stage of the stainless steel production process, carried out by means of the casting ladle 10, waste materials and liquid steel are spilled onto the floor of the steel mill.

The casting ladle is then transported to the continuous steel casting section 13 wherein the liquid steel is poured from the casting ladle 10 into a tundish 12. The tundish 12 has one or more outlets through which the steel melt flows into the casting machine wherein the liquid steel is solidified in the form of large stainless steel slabs.

The EAF's 1, the AOD furnace 7, the transfer ladles 5, the casting ladles 10 and the tundish 12 are all provided with refractory linings which have to be replaced from time to time, for example every few months. Dismantling the refractory linings is done in the steel mill by means of demolition hammers. The destroyed refractory linings are removed by means of a bulldozer. The fine fraction and dust is left on the floor of the steel mill and is swept together when cleaning the floor. The particulate mixed waste material which is periodically gathered from the floor of the steel mill thus comprises a range of materials including slag formers, slag materials, stainless steel particles and spent refractory materials.

In the steel mill described with reference to Figure 1 the main by-product which is generated is steel slag. This material can be entirely recycled as construction aggregate and as carbonatable binder for producing artificial stone materials.

More problematic waste materials are the refractory lining materials produced by dismantling the refractory linings and the particulate mixed waste material which is gathered periodically from the floor of the steel mill. Per 10.000 tons of steel slag about 550 tons of spent refractory lining material and about 430 tons of mixed waste material is produced in the steel mill.

At least a portion of the larger pieces of the refractory lining material, in particular the refractory brick fraction containing pieces larger than 60 mm, can be reused to produce new refractory bricks. They can be manually recuperated from this larger fraction of the refractory lining material. They have to be sorted since the refractory bricks are of different compositions. This can be done manually based on the visual appearance/colour of the refractory pieces. The refractory brick fraction also contains pieces of refractory material which are not suited to be reused to produce new refractory bricks. These pieces are preferably crushed, in particular to a particle size smaller than 60 mm.

A first type of refractory bricks are MgO-CaO based. They include tempered dolomite bricks containing about 40 wt.% MgO, about 60 wt.% CaO and a few wt.% C (on average about 2 wt.% C) and fired dolomite bricks which contain from 65 wt.% to 73 wt.% of MgO and from 20 to 32 wt.% of CaO. The AOD furnace is entirely lined with such refractory bricks. The lid and the bottom of the AOD furnace is more in particular lined with the tempered dolomite bricks whilst the wall is lined with the fired dolomite bricks.

A second type of refractory bricks are Al₂O₃ based, a third type of refractory bricks are MgO based (MgO-C or MgO sintered) and a fourth type of refractory bricks are SiO₂ based.

In order to reduce the degradation of the refractory lining of the EAF, the liquid slag in the EAF has to contain about 10 to 12 wt.% of MgO. A portion of the dismantled refractory lining material can be used as EAF slag former in particular in order to replace at least a portion of the dolime which is used to provide the MgO in the EAF slag. A portion of the dismantled refractory lining material can additionally, or alternatively, also be used as OD slag former in order to replace at least a portion of the dolime which is used to provide the MgO in the AOD (or VOD) slag.

After having removed the pieces of refractory lining material which can be reused to produce new refractory bricks, i.e. the refractory brick fraction, and after crushing the refractory brick fraction which cannot be reused to produce new refractory bricks, an aggregate remains. This aggregate has for example a particle size of upto 60 mm. The quality, in particular the size, of this aggregate is not good/large enough to use this fraction also for the production of new refractory bricks. It has a poorer strength and density and a higher porosity than the virgin refractory material.

In a preferred embodiment of the method according to the present invention, the aggregate which remains after having recuperated the refractory brick fraction is separated in one or more aggregate fractions including at least one further fraction. The further fraction is a coarse fraction comprising for example particles/pieces larger than 10 mm, in particular from 10 to 60 mm, whilst the other aggregate fractions may comprises smaller particles/pieces, in particular particles/pieces smaller than 10 mm, in particular from 0 to 10 mm.

When indicating particle size ranges in the present description and claims, they refer to sieve sizes, which means that most of the particles/pieces are within the indicated particle size range, in particular at least 90 vol.% or even at least 95 vol.% of thereof, but that some larger and especially some smaller particles may still be present.

At least a portion of the further, coarser fraction is preferably reused as EAF or OD slag former. Due to the larger particle size, it can be transferred to one of the silos 3 and charged by means of one of the conveyor belts 4 in the EAF 1. It has been found that, notwithstanding the fact that virgin refractory material dissolves only very slowly in molten steel slag, these somewhat degraded fraction of the spent refractories dissolves substantially completely in the molten EAF slag within the time, of less than one hour, required to produce the stainless steel in the EAF. In practice, the amount of the further coarser fraction which can be added to the EAF is limited. A smaller amount can be dissolved in the liquid EAF slag but higher amounts cause problems. The remaining amount of the coarser fractions is preferably milled to a finer material.

In accordance with the present invention, at least one of the aggregate fractions is a calcium/magnesium aggregate fraction which contains a magnesium oxide - calcium oxide based refractory lining material. As described already hereabove, the AOD refractory lining may be made entirely of magnesium oxide - calcium oxide based refractory lining material. The lid and the bottom may be made in particular of a refractory lining material comprising about 40% MgO and about 60% CaO whilst the wall may be made in particular of a refractory lining material comprising about 65 - 75% MgO and about 20 to 32% CaO. The spent refractory lining material of the AOD is preferably separated in at least two aggregate fractions, namely the spent refractory material from the lid and from the bottom (hereinafter the first AOD aggregate fraction), and the spent refractory material from the wall (hereinafter the second AOD aggregate fraction), or in at least three aggregate fractions, namely the spent refractory material from the lid, the spent refractory material from the bottom and the spent refractory material from the wall.

The refractory linings of the other furnaces and ladles may also comprise magnesium oxide - calcium oxide based refractory lining materials but this to a smaller extent than the AOD. It is thus possible to recycle further calcium/magnesium aggregate fractions from these spent refractory materials, which can then also be used as calcium/magnesium aggregate fraction in the method of the present invention.

The spent refractory lining of the AOD is thus separated in a refractory brick fraction, which can be reused to produce refractory bricks, and one or more coarser fractions, consisting of pieces/particles larger than for example 10 mm, at least a portion of which can be fed as such as slag former in the EAF. The remaining spent refractory material of the AOD can be comminuted, i.e. crushed or milled, to produce a granular material, or a fine fraction can be sieved out of this material to achieve a granular material.

This granular material produced from the spent refractories, i.e. of the dismantled refractory linings, dissolves or melts much more quickly in the liquid EAF slag or in the liquid OD slag when the granular material is fed into the AOD. In order to be able to reuse this granular material as EAF or OD slag former, it is agglomerated in larger pieces.

To produce the granular material, it has been found that the calcium/magnesium aggregate fractions can also be disintegrated by treating them with water so that they swell by the formation of the hydrates, in particular by the formation of calcium hydroxide (Portlandite). It was found that the 0 - 10 mm fraction of the spent refractories originating from the lid/cone of the AOD disintegrated in particles between 0 and 2 mm (D₅₀ was comprised between 0.1 and 0.2 mm), the 0 - 10 mm fraction of the spent refractories originating from the wall of the AOD disintegrated in particles between 0 and 6 mm (D₅₀ was equal to about 0.6 mm) and the 0 - 10 mm fraction of the spent refractories originating from the bottom of the AOD disintegrated in particles between 0 and 7 mm (D₅₀ was equal to about 1.0 mm). Since the lid of the AOD consisted of the tempered dolomite refractory material, it appears that the spent MgO-CaO-C refractories were most suitable to be disintegrated into a fine material by means of water.

The spent refractory aggregate, is preferably crushed or milled before agglomerating it into larger pieces, especially when it has not been treated with water. Even after having been disintegrated with water, it can be further milled to a smaller particle size. The smaller the particle size, the more quickly the refractory material can be liquefied/dissolved in the EAF. Upon being aggregated into said larger pieces, the spent refractory granular material preferably has a D₅₀ value smaller than 0.5 mm, preferably smaller than 0.25 mm and more preferably smaller than 0.125 mm and most preferably smaller than 0.063 mm.

The granular material containing the magnesium oxide - calcium oxide based refractory lining material can be agglomerated into larger pieces without adding a binder thereto. For achieving the required small particle size, the granular material can be sieved out of the calcium/magnesium aggregate fraction or the calcium/magnesium aggregate fraction can be milled to such a small particle size. Calcium oxide and also magnesium oxide appears to be mechanically activated during the milling operation so that they are hydrated more quickly. It has been found that the particles should have a minimum water content in order to be able to obtain a sufficiently high green strength without having to use a binder. The granular material which is agglomerated should preferably have a moisture content of at least 2.0 wt.%, preferably at least 4.0 wt.%, more preferably at least 6.0 wt.% and most preferably at least 8.0 wt.%.

Tests have been done with the 0 - 10 mm fraction of the first fraction of the AOD spent refractory lining material as such, having a moisture content of 2.4 to 2.8%, and with the 0 -2 mm fraction which was sieved out of this 0 - 10 mm fraction and which had a moisture content of 3.9%. When these fractions where compacted/briquetted under a relatively high pressure, the obtained briquettes were sufficiently strong to be introduced in the steel furnace via one of the silos 3 and one of the conveyor belts 4. They were subjected to a drop test wherein respectively 96% and 76% of the briquettes remained intact.

Tests have also been done to make briquettes with a binder. As binder use was made of 4% starch and 4% water, 5% starch and 4% water, 6% starch and 4% water, 6% starch and 6% water and 6% starch and 1% water. An additional material was used namely the 0 - 10 mm fraction milled to a particle size of 0 - 0.5 mm. This fraction had a moisture content of 0.3%. For the 0 - 10 mm fraction, an amount of starch of 6% gave the best results and for the 0 - 2 mm fraction an amount of starch of 4%. The 0 - 0.5 mm fraction was compacted under a pressure which was twice a high and gave, with 4% starch and 2% water, briquettes which had the highest resistance against cracking in the drop test.

Instead of a starch as binder, other binders could be used for example cement or a combination of molasses and lime. The cement is preferably a fast hardening cement, in particular an aluminium cement.

Especially when a binder is used, the larger pieces do not have to be made by a compaction process, in particular by a briquetting process, but they can also be made by a granulating process, for example in a granulating pan or in a granulating mixer.

Since the LOI and the CO₂ production of EAF slag formers should be kept to a minimum, the larger pieces, i.e. the granulated material or the briquettes, should preferably not be made with the use of a binder. In accordance with the present invention it has been found that the required strength of the larger EAF slag former pieces can be achieved by hydrating the magnesium oxide - calcium oxide based refractory lining material to provide calcium hydroxide, and optionally also magnesium hydroxide, in the granular material, and by carbonating at least a portion of these hydroxides after having agglomerated the granular material into the larger pieces. It has been found that only a minimum of carbonates need to be produced to achieve a compressive strength which is sufficiently high for handling the larger pieces and for feeding them into the steel furnace. Preferably, at least 0.2 wt.%, preferably at least 0.4 wt.% of carbonates (expressed as CaCO₃ and/or MgCO₃) are formed in the larger pieces before they are introduced in the steel furnace (EAF or AOD). These amounts are thus in addition to any carbonates which may already have been formed in the granular material before it is agglomerated into the larger pieces.

The magnesium oxide - calcium oxide based refractory lining material can be hydrated before and/or after having produced the granular material. The hydration can be accelerated mechanically by milling the refractory lining material, in particular by a wet milling process. Once hydrated, the hydroxides can be carbonated quite easily and quickly.

The required carbonation of the hydroxides can be achieved by simply storing the freshly agglomerated larger pieces in air. During this storage, the larger pieces will also be dried so that their moisture content is reduced, and less water need to be evaporated in the steel furnace. Although air only contains about 0.04 vol.% of CO₂, it was found that such a low concentration of carbon dioxide was enough to carbonate the larger pieces when storing them for one or more days. Optionally, the air wherein the larger pieces are stored/dried may be enriched with CO₂. The concentration of CO₂ in the air is however kept sufficiently low, in particular lower than 5 vol.% or even lower than 3 vol.%. It has indeed been found that when carbonating the larger pieces with air, more carbonates are formed onto the surface of the larger pieces and a sufficiently high strength can be achieved with a minimum of carbonates. This is an advantage since slag formers should preferably contain only a minimum of carbonates.

The presence of the hydroxides in the hydrated magnesium oxide - calcium oxide based refractory material does not only enable the material to be carbonated but accelerates also the dissolution of the refractory material particles in the liquid slag. Hydration of the oxides in the refractory material causes a swelling reaction. Once introduced in the steel furnace, the hydroxides decompose quickly and the small particles of the refractory material become more porous. The liquid slag can thus penetrate more quickly into these particles which accelerates the dissolution of these particles.

As described hereabove another waste material, which is produced in larger amounts, is the particulate mixed waste material which is collected from the floor of the steel mill. This waste material has a particle size which is usually smaller than 10 mm. It comprises a metal fraction and a non-metal fraction. The chemical composition of the non-metal fraction may vary to a relatively large extent. The metal fraction is preferably separated from the non-metal fraction to recover the valuable metal/steel. This can be done by wet jigging, as disclosed for example in EP 3 842 399, and by magnetic separation techniques.

Also from the fine fractions of the spent refractories, in particular from the 0 - 10 mm fractions thereof, metal can be recovered, in particular by wet jigging and magnetic separation techniques. The non-metal fraction of the mixed waste material was mixed with the non-metal fraction of the spent refractories. This mixed granular material had for example the chemical compositions, measured over five consecutive months, as indicated in Table 1.

**Table 1: Chemical composition of the mixed granular material composed of the non-metal fraction of the particulate mixed waste material collected from the floor of the stainless steel mill and the non-metal fraction of the fine spent refractory fraction**

| wt.% | CaO | MgO | SiO₂ | Al₂O₃ | Fe₂O₃ | Cr₂O₃ | C |
|---|---|---|---|---|---|---|---|
| Month 1 | 33.9 | 25.2 | 16.8 | 8.5 | 6 | 4.5 | 1.5 |
| Month 2 | 34.6 | 26.5 | 12.6 | 8.4 | 5.1 | 4.4 | 1.31 |
| Month 3 | 34.2 | 22.9 | 11.3 | 8.8 | 9.9 | 8 | 1.5 |
| Month 4 | 34.1 | 22 | 12.2 | 8.9 | 11.1 | 8.1 | 1.4 |
| Month 5 | 33.5 | 24 | 10.6 | 7.8 | 10.6 | 7.5 | 1.59 |
| Average | 34.06 | 24.12 | 12.7 | 8.48 | 8.54 | 6.5 | 1.46 |

This mixed granular material contains a lot of chromium oxide and is thus a harmful waste material which needs to be landfilled under controlled conditions. It is however very suited for use in the method according to the present invention since it contains a relatively high amount of calcium and magnesium, expressed as CaO and MgO. On the other hand, its SiO₂ content is relatively low or, in other words, its basicity is relatively high so that, when used as slag former, it can take up quite some silicon which has been oxidised in the stainless steel melt.

It is preferably to remove first a portion of the metal fraction from the mixed material, or from the mixed waste material and the fine refractory material used to obtain the mixed granular material, but this is not necessary. The metal fraction can indeed be reintroduced in the steel furnace together with the non-metal fraction of the mixed material. It will melt in the steel furnace and will thus arrive in the steel melt. The average granulometry of nine particulate mixed granular material samples (mixture of the non-metal fraction of the mixed waste material from the floor and of the fine spent refractory fractions), and the minimum and the maximum values, are indicated in Table 2.

**Table 2: Average granulometry of nine mixed granular material samples and the minimum and maximum values thereof**

| Sieve size (mm) % passing | Minimum | Maximum | Average |
|---|---|---|---|
| 10 | 82.8 | 100.0 | 95.6 |
| 8 | 79.4 | 98.4 | 92.6 |
| 6.3 | 75.4 | 94.9 | 88.5 |
| 4 | 66.3 | 86.7 | 79.6 |
| 2 | 54.5 | 74.7 | 68.6 |
| 1 | 45.3 | 64.7 | 57.0 |
| 0.5 | 36.2 | 52.0 | 45.5 |
| 0.25 | 24.3 | 41.3 | 34.2 |
| 0.125 | 5.5 | 27.3 | 16.1 |
| 0.063 | 4.0 | 12.8 | 6.7 |

In order to be able to charge the mixed granular material into the steel furnace, it needs to be agglomerated into larger pieces. This can be done in the same way as described hereabove for the spent refractory aggregate fraction. Preferably, a mixture is made of the mixed material and one of the (milled) spent refractory aggregate fractions which has a higher MgO content, in particular of one or more of the AOD spent refractories, in order to increase the MgO content of the mixture. This mixture can then be agglomerated in the same way as described hereabove for the spent magnesium oxide - calcium oxide refractory aggregate fraction. A mixture of all the spent refractory aggregate fractions can be used. However, the dismantled refractory linings are preferably collected in different groups having different magnesium oxide contents. The spent refractory fraction which is used to make the mixture is then taken at least from a group of refractory linings which has a higher magnesium oxide content than the non-metal fraction of the mixed waste material. In this way, the magnesium oxide content can be increased to a higher value so that the larger pieces (briquettes or granulates) made thereof are more suitable to replace dolime.

The mixed granular material, or the materials from which it is composed, is preferably milled to reduce the particle size thereof. It is preferably milled to a D₅₀ value smaller than 0.5 mm, preferably smaller than 0.25 mm, more preferably smaller than 0.125 mm and most preferably smaller than 0.063 mm. If the metal fraction has not yet already been removed, the metal particles, i.e. the stainless steel particles, are preferably removed from the milled non-metal fraction. The average granulometry of six wet milled mixed granular material samples from which the metal fraction has been removed is indicated in Table 4.

**Table 3: Average granulometry of six milled mixed granular material samples**

| Sieve size (mm) % passing | |
|---|---|
| 2 | 100.00 |
| 1 | 100.00 |
| 0.5 | 100.00 |
| 0.25 | 99.50 |
| 0.125 | 92.14 |
| 0.063 | 77.33 |
| 0.045 | 64.10 |

It has been found that this finely milled mixed granular material can be agglomerated without having to use a binder. The material was compacted in cylindrical pieces having a diameter of 40 mm and a height of 40 mm. A compaction pressure of 90 bars appeared to be too high since the cylinders cracked. However, at somewhat lower compaction pressure sufficiently strong cylinders could be obtained. The average compressive strength (of 3 samples), measured after compaction and after 7 days, is indicated in Table 5.

**Table 4: Average compressive strength after pressing and 7 days later of cylinders pressed from the non-metal fraction of wet milled mixed granular material samples having an average granulometry as indicated in Table 4**

| Compaction pressure (MPa) | Moisture content after pressing (%) | Moisture content after 7 days (%) | Compressive strength (MPa) |
|---|---|---|---|
| 6 | 11.71 | | 4.678 |
| 6 | | 2.97 | 8.488 |
| 7 | 11.82 | | 3.367 |
| 7 | | 2.97 | 8.035 |
| 8 | 10.81 | | 4.974 |
| 8 | | 2.97 | 8.065 |

After compaction, the cylindrical pieces had already some strength. Quite surprisingly, this strength increases considerably, and nearly doubles, after further storage for seven days. Instead of swelling and falling apart, the cylindrical pieces gained strength. The following experiment has shown that especially the calcium oxides are initially already hydrated in the granular material whilst the magnesium oxides only hydrate so slowly that they cause no swelling of the particles in the agglomerated material contained in the larger pieces. In those larger pieces, the hydroxides are quite quickly carbonated to some extent to obtain the observed gain of strength.

### Experiment

A fraction of the spent tempered dolomite refractory from the lid of the AOD and a fraction of the spent fired dolomite refractory from the wall of the AOD was milled to a particle size of between 0 and 0.5 mm. The particle size distribution was similar to the one given in Table 3. The milled material was mixed with water and was stored for some time, during which most of the calcium oxide hydrated to produce calcium hydroxide. Both materials were mixed in the ratio wherein the tempered dolomite fraction and the fired dolomite fraction are produced in practice so that a uniform product can be produced.

The granular material was then compacted, at a pressure of 7 MPa, to produce cylindrical pieces/briquettes having a diameter of 40 mm and a height of between 35 and 39 mm and a weight of between 90 and 98 grams. Upon compacting, the granular material had a moisture content of 15.6% by wet weight. The briquettes were allowed to dry in the free air at room temperature for 1 to 8 days.

**Table 5: Compressive strength and final moisture contents of the briquettes after drying/natural carbonation.**

| Briquette | Initial moisture content (%) | Days of drying | Compressive strength (MPa) | Final moisture content |
|---|---|---|---|---|
| Briq. 0 | 15.63 | 0 | - | 15.63 |
| Briq. 1 | 15.63 | 1 | 2.67 | 11.63 |
| Briq. 2 | 15.63 | 2 | 5.26 | 6.90 |
| Briq. 3 | 15.63 | 3 | 5.78 | 3.03 |
| Briq. 4 | 15.63 | 7 | 8.52 | 1.28 |
| Briq. 5 | 15.63 | 8 | 8.40 | 1.21 |

It can be seen that the moisture content of the briquettes drops down quite quickly to a quite low moisture content. No energy is thus required to dry of the briquettes before they can be used as slag former. At the same time, the compressive strength of the briquettes increases considerably. A binder is thus not necessary and is therefore preferably not added.

The mineral composition of the different briquettes has been analysed by XRD. The results thereof are indicated in Table 6.

**Table 6: First part of the mineral composition (in wt.%) of the briquettes after different days of drying/natural carbonation.**

| Briquette | Periclase | Brucite | Magnesite | Lime | Portlandite | Calcite |
|---|---|---|---|---|---|---|
| Briq. 0 | 38.70 | 0.42 | 0.45 | 0.01 | 38.42 | 2.25 |
| Briq. 1 | 45.36 | 0.42 | 0.23 | 0.00 | 33.13 | 2.30 |
| Briq. 2 | 43.48 | 0.41 | 0.44 | 0.02 | 34.68 | 2.25 |
| Briq. 3 | 38.31 | 0.37 | 0.76 | 0.01 | 36.83 | 2.47 |
| Briq. 4 | 46.05 | 0.31 | 1.06 | 0.02 | 30.83 | 2.81 |
| Briq. 5 | 43.90 | 0.28 | 0.90 | 0.02 | 33.94 | 3.33 |
| Surface | 26.69 | 0.35 | 0.08 | 0.00 | 22.68 | 39.47 |

It can be seen that most of the lime (CaO) has been hydrated into portlandite (Ca(OH)₂). During the drying process, some of the portlandite is carbonated to produce calcite. The linear regression coefficient for the decrease of the portlandite is equal to -0.51 whilst the linear regression coefficient for the increase of the calcite is equal to 0.12. On average, after 8 days, an amount of about 1 wt.% of calcite is produced.

Only a small amount of the periclase (MgO) has been hydrated into brucite (Mg(OH)₂). This can be explained by the fact that the magnesium oxide is dead burnt, and has a much smaller reactivity than dead burnt/sintered lime. The particles of the granular material should therefore preferably be relatively small so that they can dissolve quickly in the liquid slag, although the dissolution rate of these particles is increased by the portlandite which has been formed in these particles.

During the drying process, also some of the brucite is carbonated to produce magnesite. Based on the data in Table 6 the linear regression coefficient for the decrease of the brucite is equal to -0.02 whilst the linear regression coefficient for the increase of the magnesite is equal to 0.08. On average, after 8 days, an amount of about 0.6 wt.% of magnesite is produced.

After 10 days of drying, the surface of a briquette was scraped off with a knife. The composition of the scraped off material is shown in the last line of Table 6. This material surprisingly contains a lot of calcite. At the surface of the briquettes a calcite rich layer is thus formed which may contribute to the strength of the briquette without considerably increasing the overall carbonate content of the briquette. This could explain the relatively small increase in calcite content compared to the reduction of the portlandite content in the core of the briquette.

In the following Table 7 the other minerals which are present in an amount of more than 1% in the briquettes and which have also been analysed by XRD are indicated.

**Table 7: Second part of the mineral composition (in wt.%) of the briquettes after different days of drying/natural carbonation.**

| Briquette | Quartz | Corundum | γ-C2S | Akermanite | Bredigite |
|---|---|---|---|---|---|
| Briq. 0 | 2.05 | 1.14 | 1.41 | 0.75 | 1.44 |
| Briq. 1 | 1.76 | 0.94 | 1.62 | 0.80 | 1.63 |
| Briq. 2 | 1.56 | 0.95 | 1.42 | 1.14 | 1.66 |
| Briq. 3 | 1.70 | 1.13 | 1.51 | 1.50 | 1.64 |
| Briq. 4 | 1.92 | 1.15 | 0.89 | 0.82 | 1.04 |
| Briq. 5 | 1.62 | 0.88 | 0.92 | 0.96 | 0.86 |
| Surface | 1.41 | 0.17 | 0.90 | 0.60 | 0.00 |

| | Merwinite | Cuspidine | Diopside | Monticellite | Graphite |
|---|---|---|---|---|---|
| Briq. 0 | 3.50 | 1.05 | 0.29 | 3.57 | 2.97 |
| Briq. 1 | 3.04 | 1.08 | 0.36 | 3.06 | 2.88 |
| Briq. 2 | 2.45 | 0.80 | 0.34 | 3.42 | 3.47 |
| Briq. 3 | 3.69 | 1.16 | 0.43 | 3.78 | 3.41 |
| Briq. 4 | 2.80 | 0.85 | 0.32 | 3.72 | 3.63 |
| Briq. 5 | 2.47 | 0.79 | 0.27 | 3.62 | 3.21 |
| Surface | 1.33 | 0.57 | 0.00 | 0.49 | 4.21 |

It appears that also the gamma dicalcium silicate content may be reduced during storage of the briquettes, which could possibly be explained by a carbonation of this mineral phase.

### Practical Example

In order to illustrate the importance of the application of the present recycling method, some calculations have been made based on practical data.

In a stainless steel mill as illustrated in Figure 1, wherein the different furnaces may each contain more than 100 tons of stainless steel melt, about 8000 tons of mixed waste material (0 - 10 mm) including the fine fraction (0 - 10 mm) of the spent refractories, about 3500 tons of spent AOD refractories and about 6000 tons of spent refractories of other sources, namely of the EAF's, the transfer ladles, the casting ladles and the tundish, are produced per year. From these materials, about 1700 tons of refractory brick fraction, mainly dolomite, can be reused for producing new refractory bricks whilst about 1600 tons of the 10/60 spent refractory fraction could be reintroduced, as EAF slag former, in the EAF's. The remaining waste material contained about 12300 tons of the 0 - 10 mm fraction (= total of mixed waste material and 0 - 10 mm spent refractory fraction, including milled refractory materials which have been milled to recover steel) and about 1900 tons of the 10/60 spent refractory fraction.

In this Example a mixture of AOD spent refractory material and mixed waste material (collected from the floor and the fine spent refractory fraction) are made, in particular a mixture which has an MgO content similar to that of dolime, i.e. which contains about 40 wt.% of MgO. In view of this relatively high MgO content, mixtures are made of the mixed waste material with the spent refractories collected from the AOD. As described hereabove, these spent refractories comprise a mixture of different MgO-CaO refractory bricks. The average composition of the mixed waste material, of the spent AOD refractories and of some mixtures thereof is given in Table 8.

**Table 8: Average composition of the 0 - 10 mm mixed waste material, the AOD spent refractories and mixtures thereof**

| | Mixed waste material including 0-10 spent refractories | AOD spent refractories | 50/50 mixture | 60/40 mixture | 65/35 mixture | 70/30 mixture |
|---|---|---|---|---|---|---|
| MgO (wt.%) | 24 | 57 | 40.5 | 37.2 | 35.6 | 33.9 |
| CaO (wt.%) | 34 | 44 | 39 | 38 | 37.5 | 37 |
| SiO₂ (wt.%) | 12 | 0 | 6 | 7.2 | 7.8 | 8.4 |
| Amount (tons) | variable | 3500 | 7000 | 8750 | 10000 | 11667 |

In case all the AOD refractories are milled and mixed with mixed waste material, including the fine spent refractory fraction, in a 50/50 ratio, to produce larger pieces which can be used to replace dolime, about 3500 tons of mixed waste material can be recycled, in addition to the 3500 tons of AOD spent refractories, to the EAF's. This mixture comprises somewhat less CaO than dolime, namely only about 39 wt.% whereas dolime contains about 60 wt.% of CaO. In practice, a somewhat larger amount of quicklime therefore has to be added to the EAF, namely about 50% of the mixture of mixed waste material and AOD spent refractories.

The use of additional quicklime is advantageous in that it dilutes the amount of other elements in this recycled mixture, in particular the amount of SiO₂. This amount should preferably be lower than 5 wt.% in order to keep the energy requirements for melting this SiO₂ limited. When adding 50% quicklime, the SiO₂ content of the 50/50 mixture is reduced to about 4 wt.% and the SiO₂ content of the 60/40 mixture to about 4.8 wt.%.

## Claims

1. A method for recycling waste material generated in a stainless steelmaking process in a stainless steel mill, which steelmaking process comprises the steps of:
- charging and melting at least stainless steel scrap and EAF slag formers in an electric arc furnace (1) to produce molten stainless steel covered by a layer of molten EAF steel slag in the electric arc furnace (1);
- tapping the molten steel into at least one transfer ladle (5);
- transporting molten steel with the transfer ladle (5) to a refining vessel (7);
- charging the molten steel from the transfer ladle (5) into the refining vessel (7) and charging OD slag formers into the refining vessel (7) to produce a layer of molten OD steel slag covering the molten stainless steel in the refining vessel (7);
- refining the molten steel in accordance with an oxygen decarburisation process in the refining vessel (7);
- tapping the refined molten steel into at least one casting ladle (10) and adding ladle slag formers thereto;
- transporting the refined molten steel with the casting ladle (10) to a finishing stand (11);
- finishing the stainless steel in the casting ladle (10) by adding, if necessary, further alloying elements thereto;
- transporting the finished stainless steel with the casting ladle (10) to a tundish (12);
- casting and solidifying the finished stainless steel by means of the tundish (12);
- periodically dismantling refractory linings of the electric arc furnace (1), the refining vessel (7), the transfer ladle (5), the casting ladle (10) and the tundish (12) in the steel mill and providing them with new refractory linings; and
- periodically gathering materials which were used or produced in the steelmaking process and which arrived onto the floor of the steel mill in the form of a particulate mixed waste material from the floor of the steel mill, which particulate mixed waste material is composed of a metal and a non-metal fraction,
in which method the dismantled refractory linings are separated in different fractions including one or more refractory brick fractions, which comprises pieces of the dismantled refractory linings which can be reused to produce refractory bricks, and one or more aggregate fractions which are finer than the refractory brick fractions, **characterised in that**
said aggregate fractions comprise at least one calcium/magnesium aggregate fraction, which contains a magnesium oxide - calcium oxide based refractory lining material, and **in that**
the method comprises the steps of:
- producing a granular material with at least a portion of said calcium/magnesium aggregate fraction;
- agglomerating said granular material into larger pieces; and
- introducing said larger pieces as one of said EAF slag formers into said electric arc furnace (1) and/or as one of said OD slag formers into said refining vessel (7),
in which method at least a portion of the calcium oxide present in said magnesium oxide - calcium oxide based refractory lining material is hydrated to provide calcium hydroxide in the granular material and said larger pieces containing said granular material are hardened before introducing them into said electric arc furnace or in said refining vessel by carbonating at least a portion of the calcium hydroxide contained therein.

2. The method according to claim 1, **characterised in that** said larger pieces have an MgO content of at least 30 wt.%, preferably of at least 35 wt.% and more preferably of at least 37.5 wt.%.

3. The method according to claim 1 or 2, **characterised in that** said granular material is agglomerated into said larger pieces without adding a binder thereto.

4. The method according to any one of the claims 1 to 3, **characterised in that** said step of producing said granular material comprises the step of disintegrating said calcium/magnesium aggregate fraction by treating it with water.

5. The method according to any one of the claims 1 to 4, **characterised in that** said step of producing said granular material comprises the step of crushing or milling said calcium/magnesium aggregate fraction.

6. The method according to any one of the claims 1 to 5, **characterised in that** said granular material has a D₅₀ value smaller than 0.5 mm, preferably smaller than 0.25 mm, more preferably smaller than 0.125 mm and most preferably smaller than 0.063 mm.

7. The method according to any one of the claims 1 to 6, **characterised in that** when agglomerating said granular material it has a moisture content of at least 2.0 wt.%, preferably at least 4.0 wt.%, more preferably at least 6.0 wt.% and most preferably at least 8.0 wt.%.

8. The method according to any one of the claims 1 to 7, **characterised in that** when agglomerating said granular material it has a moisture content of at less than 25.0 wt.%, preferably less than 20.0 wt.%, more preferably less than 18.0 wt.% and most preferably less than 15.0 wt.%.

9. The method according to any one of the claims 1 to 8, **characterised in that** after having agglomerated the granular material into said larger pieces, the larger pieces are allowed to dry in air which is optionally enriched with carbon dioxide.

10. The method according to any one of the claims 1 to 9, **characterised in that** said larger pieces are made by granulating said granular material.

11. The method according to any one of the claims 1 to 9, **characterised in that** said larger pieces are made by briquetting said granular material.

12. The method according to claim 11, **characterised in that** said larger pieces are briquetted with a compaction pressure of at least 3.0 MPa, preferably at least 4.0 MPa and more preferably at least 5.0 MPa, said compaction pressure being preferably smaller than 10.0 MPa, more preferably smaller than 9.0 MPa.

13. The method according to any one of the claims 1 to 12, **characterised in that** said different fractions wherein the dismantled refractory linings are separated include a further aggregate fraction, at least a portion of which is introduced as one of said EAF or OD slag formers into said electric arc furnace (1) or into said refining vessel (7), said further aggregate fraction preferably having a particle size larger than 5.0 mm, more preferably larger than 7.5 mm and most preferably larger than 10.0 mm.

14. The method according to any one of the claims 1 to 13, **characterised in that** after having agglomerated the granular material into said larger pieces, at least 0.2 wt.%, preferably at least 0.4 wt.% of carbonates are formed in the larger pieces before they are introduced in the electric arc furnace (1) or in the refining vessel (7).

## Patentansprüche

1. Ein Verfahren zur Wiederverwertung von Abfallstoffen, die in einem Edelstahlherstellungsverfahren in einem Edelstahlwerk erzeugt wurden, wobei dieses Stahlherstellungsverfahren die folgenden Schritte umfasst:
- Beschicken und Schmelzen von zumindest Edelstahlschrott und EAF-Schlackebildnern in einem Elektrolichtbogenofen (1), um geschmolzenen Edelstahl bedeckt von einer Schicht geschmolzener EAF-Stahlschlacke im Elektrolichtbogenofen (1) herzustellen;
- Abstechen des geschmolzenen Stahls in mindestens eine Transportpfanne (5);
- Befördern des geschmolzenen Stahls mit der Transportpfanne (5) zu einem Raffinationsgefäß (7);
- Beschicken des geschmolzenen Stahls von der Transportpfanne (5) in das Raffinationsgefäß (7) und Beschicken von OD-Schlackebildnern in das Raffinationsgefäß (7), um eine Schicht geschmolzener OD-Stahlschlacke herzustellen, welche den geschmolzenen Edelstahl im Raffinationsgefäß (7) bedeckt;
- Raffinieren des geschmolzenen Stahls nach einem Sauerstoff-Entkohlungsverfahren im Raffinationsgefäß (7);
- Abstechen des raffinierten geschmolzenen Stahls in mindestens eine Gießpfanne (10) und Hinzufügen von Pfannenschlackenbildnern dazu;
- Befördern des raffinierten geschmolzenen Stahls mit der Gießpfanne (10) zu einem Fertigungsstand (11);
- Fertigstellen des Edelstahls in der Gießpfanne (10) durch Hinzufügen, bei Bedarf, weiterer Legierungselemente dazu;
- Befördern des fertigen Edelstahls mit der Gießpfanne (10) zu einem Verteilergefäß (12);
- Gießen und Verfestigen des fertigen Edelstahls mittels des Verteilergefäßes (12);
- periodisches Entfernen der feuerfesten Auskleidungen des Elektrolichtbogenofens (1), des Raffinationsgefäßes (7), der Transportpfanne (5), der Gießpfanne (10) und des Verteilergefäßes (12) im Stahlwerk und Anbringen neuer feuerfester Auskleidungen; und
- periodisches Einsammeln von Materialien, die im Stahlherstellungsverfahren verwendet oder produziert wurden und die in Form von partikelförmigen gemischten Abfallstoffen auf den Boden des Stahlwerks gelangten, vom Boden des Stahlwerks, wobei die partikelförmigen gemischten Abfallstoffe aus einer Metall- und einer Nichtmetallfraktion zusammengesetzt sind,
in welchem Verfahren die entfernten feuerfesten Auskleidungen in verschiedene Fraktionen getrennt werden, einschließlich einer oder mehrerer Fraktionen von feuerfesten Ziegeln, welche Stücke der entfernten feuerfesten Auskleidungen umfassen, die wiederverwendet werden können, um feuerfeste Ziegel herzustellen, und eine oder mehrere Aggregatfraktionen, die feiner als die Fraktionen von feuerfesten Ziegeln sind,
**dadurch gekennzeichnet, dass**
die erwähnten Aggregatfraktionen mindestens eine Calcium/Magnesium-Aggregatfraktion umfassen, welche ein feuerfestes Auskleidungsmaterial auf Basis von Magnesiumoxid - Calciumoxid enthält, und dadurch, dass
das Verfahren die folgende Schritten umfasst:
- Herstellen eines körnigen Materials mit zumindest einem Anteil der erwähnten Calcium/Magnesium-Aggregatfraktion;
- Agglomerieren des erwähnten körnigen Materials in größere Stücke; und
- Einbringen der erwähnten größeren Stücke als einen der erwähnten EAF-Schlackebildner in den erwähnten Elektrolichtbogenofen (1) und/oder als einen der erwähnten OD-Schlackebildner in das erwähnte Raffinationsgefäß (7),
in welchem Verfahren zumindest ein Anteil des Calciumoxids, das im erwähnten feuerfesten Auskleidungsmaterial auf Basis von Magnesiumoxid - Calciumoxid anwesend ist, hydriert wird, um Calciumhydroxid im das körnigen Material bereitzustellen, und die erwähnten größeren Stücke, die das erwähnte körnige Material enthalten, gehärtet werden, bevor sie in den erwähnten Elektrolichtbogenofen oder in das erwähnte Raffinationsgefäß eingebracht werden, indem zumindest ein Anteil des darin enthaltenen Calciumhydroxids karbonisiert wird.

2. Das Verfahren nach Anspruch 1, **dadurch gekennzeichnet, dass** die erwähnten größeren Stücke einen MgO-Gehalt von mindestens 30 Gew.-%, bevorzugt mindestens 35 Gew.-% und noch besser mindestens 37,5 Gew.-% haben.

3. Das Verfahren nach Anspruch 1 oder 2, **dadurch gekennzeichnet, dass** das erwähnte körnige Material in die erwähnten größeren Stücke agglomeriert wird, ohne ein Bindemittel dazu hinzuzufügen.

4. Das Verfahren nach irgendeinem der Ansprüche 1 bis 3, **dadurch gekennzeichnet, dass** der Schritt des Herstellens des erwähnten körnigen Materials den Schritt des Spaltens der erwähnten Calcium/Magnesium-Aggregatfraktion umfasst, indem sie mit Wasser behandelt wird.

5. Das Verfahren nach irgendeinem der Ansprüche 1 bis 4, **dadurch gekennzeichnet, dass** der Schritt des Herstellens des erwähnten körnigen Materials den Schritt des Brechens oder Mahlens der erwähnten Calcium/Magnesium-Aggregatfraktion umfasst.

6. Das Verfahren nach irgendeinem der Ansprüche 1 bis 5, **dadurch gekennzeichnet, dass** das erwähnte körnige Material einen D₅₀-Wert hat, der niedriger ist als 0,5 mm, bevorzugt niedriger als 0,25 mm, noch besser niedriger als 0,125 mm und am besten niedriger als 0,063 mm.

7. Das Verfahren nach irgendeinem der Ansprüche 1 bis 6, **dadurch gekennzeichnet, dass** das erwähnte körnige Material beim Aggregieren einen Feuchtigkeitsgehalt von mindestens 2,0 Gew.-%, bevorzugt mindestens 4,0 Gew.-%, noch besser mindestens 6,0 Gew.-% und am besten mindestens 8,0 Gew.-% hat.

8. Das Verfahren nach irgendeinem der Ansprüche 1 bis 7, **dadurch gekennzeichnet, dass** das erwähnte körnige Material beim Aggregieren einen Feuchtigkeitsgehalt von weniger als 25,0 Gew.-%, bevorzugt weniger als 20,0 Gew.-%, noch besser weniger als 18,0 Gew.-% und am besten weniger als 15,0 Gew.-% hat.

9. Das Verfahren nach irgendeinem der Ansprüche 1 bis 8, **dadurch gekennzeichnet, dass**, nachdem das körnige Material in die erwähnten größeren Stücke agglomeriert wurde, die größeren Stücke in Luft trocknen können, welche optional mit Kohlendioxid angereichert ist.

10. Das Verfahren nach irgendeinem der Ansprüche 1 bis 9, **dadurch gekennzeichnet, dass** die erwähnten größeren Stücke hergestellt werden, indem das erwähnte körnige Material granuliert wird.

11. Das Verfahren nach irgendeinem der Ansprüche 1 bis 9, **dadurch gekennzeichnet, dass** die erwähnten größeren Stücke hergestellt werden, indem das erwähnte körnige Material brikettiert wird.

12. Das Verfahren nach Anspruch 11, **dadurch gekennzeichnet, dass** die erwähnten größeren Stücke mit einem Verdichtungsdruck von mindestens 3,0 MPa, bevorzugt mindestens 4,0 MPa und noch besser mindestens 5,0 MPa brikettiert werden, wobei der erwähnte Verdichtungsdruck bevorzugt niedriger als 10,0 MPa, noch besser niedriger als 9,0 MPa ist.

13. Das Verfahren nach irgendeinem der Ansprüche 1 bis 12, **dadurch gekennzeichnet, dass** die erwähnten verschiedenen Fraktionen, in die die entfernten feuerfesten Auskleidungen getrennt werden, eine weitere Aggregatfraktion einschließen, wovon zumindest ein Anteil als einer der erwähnten EAF- oder OD-Schlackebildner in den erwähnten Elektrolichtbogenofen (1) oder in das erwähnte Raffinationsgefäß (7) eingebracht wird, wobei die erwähnte weitere Aggregatfraktion bevorzugt eine Korngröße von mehr als 5,0 mm, noch besser mehr als 7,5 mm und am besten mehr als 10,0 mm hat.

14. Das Verfahren nach irgendeinem der Ansprüche 1 bis 13, **dadurch gekennzeichnet, dass**, nachdem das körnige Material in die erwähnten größeren Stücke agglomeriert wurde, mindestens 0,2 Gew.-%, bevorzugt mindestens 0,4 Gew.-% Karbonate in den größeren Stücken gebildet werden, bevor sie in den Elektrolichtbogenofen (1) oder in das Raffinationsgefäß (7) eingebracht werden.

## Revendications

1. Procédé de recyclage de déchets générés dans un processus de fabrication d'acier inoxydable dans une installation de fabrication d'acier inoxydable, ledit processus de fabrication d'acier comprenant les étapes consistant à :
- charger et faire fondre au moins de la ferraille d'acier inoxydable et d'agents de formation de laitier EAF dans un four à arc électrique (1) afin de produire de l'acier inoxydable fondu recouvert d'une couche de laitier d'acier EAF fondu dans le four à arc électrique (1) ;
- transvaser l'acier fondu dans au moins une poche de transfert (5) ;
- transporter l'acier fondu à l'aide de la poche de transfert (5) vers une cuve d'affinage (7) ;
- charger l'acier fondu provenant de la poche de transfert (5) dans la cuve d'affinage (7) et charger des agents de formation de laitier OD dans la cuve d'affinage (7) afin de produire une couche de laitier d'acier OD fondues recouvrant l'acier inoxydable fondu dans la cuve d'affinage (7) ;
- affiner l'acier fondu selon un processus de décarburation à l'oxygène dans la cuve d'affinage (7) ;
- transvaser l'acier fondu affiné dans au moins une poche de coulée (10) et ajouter des agents de formation de laitier de poche dans celle-ci ;
- transporter l'acier fondu affiné avec la poche de coulée (10) vers un poste de finition (11) ;
- réaliser la finition de l'acier inoxydable dans la poche de coulée (10) en y ajoutant, si nécessaire, d'autres éléments d'alliage ;
- transporter l'acier inoxydable fini avec la poche de coulée (10) vers un répartiteur (12) ;
- couler et solidifier l'acier inoxydable fini à l'aide du répartiteur (12) ;
- démanteler périodiquement les revêtements réfractaires du four à arc électrique (1), de la cuve d'affinage (7), de la poche de transfert (5), de la poche de coulée (10) et du répartiteur (12) dans l'installation de fabrication d'acier et les fournir de nouveaux revêtements réfractaires ; et
- récupérer périodiquement les matériaux qui ont été utilisés ou produits au cours du processus de fabrication d'acier et qui se sont déposés sur le sol de l'installation de fabrication d'acier sous la forme d'un déchet mixte particulaire du sol de l'installation de fabrication d'acier, ce déchet mixte particulaire étant composé d'une fraction métallique et d'une fraction non métallique,
dans lequel les revêtements réfractaires démontés sont séparés en différentes fractions, comprenant une ou plusieurs fractions de briques réfractaires, qui comprennent des morceaux des revêtements réfractaires démontés pouvant être réutilisés pour produire des briques réfractaires, et une ou plusieurs fractions d'agrégats plus fines que les fractions de briques réfractaires,
**caractérisé en ce que**
lesdites fractions d'agrégats comprennent au moins une fraction d'agrégats de calcium/magnésium, qui contient un matériau de revêtement réfractaire à base d'oxyde de magnésium et d'oxyde de calcium, et **en ce que**
le procédé comprend les étapes consistant à :
- produire un matériau granulaire comprenant au moins une partie de ladite fraction d'agrégats de calcium/magnésium ;
- agglomérer ledit matériau granulaire en morceaux plus gros ; et
- introduire lesdits morceaux plus gros en tant que l'un desdits agents de formation de laitier EAF dans ledit four à arc électrique (1) et/ou en tant que l'un desdits agents de formation de laitier OD dans ladite cuve d'affinage (7),
dans laquelle au moins une partie de l'oxyde de calcium présent dans ledit matériau de revêtement réfractaire à base d'oxyde de magnésium et d'oxyde de calcium est hydratée pour former de l'hydroxyde de calcium dans le matériau granulaire, et lesdits morceaux de plus grande taille contenant ledit matériau granulaire sont durcis avant leur introduction dans ledit four à arc électrique ou dans ladite cuve d'affinage par carbonatation d'au moins une partie de l'hydroxyde de calcium qu'ils contiennent.

2. Procédé selon la revendication 1, **caractérisé en ce que** lesdits morceaux de plus grande taille ont une teneur en MgO d'au moins 30 % en poids, de préférence d'au moins 35 % en poids et, de manière encore plus préférable, d'au moins 37,5 % en poids.

3. Procédé selon la revendication 1 ou 2, **caractérisé en ce que** ledit matériau granulaire est aggloméré en lesdits morceaux plus gros sans y ajouter de liant.

4. Procédé selon l'une quelconque des revendications 1 à 3, **caractérisé en ce que** ladite étape de production dudit matériau granulaire comprend l'étape consistant à désintégrer ladite fraction d'agrégats de calcium/magnésium en la traitant avec de l'eau.

5. Procédé selon l'une quelconque des revendications 1 à 4, **caractérisé en ce que** ladite étape de production dudit matériau granulaire comprend l'étape consistant à broyer ou à moudre ladite fraction d'agrégats de calcium/magnésium.

6. Procédé selon l'une quelconque des revendications 1 à 5, **caractérisé en ce que** ledit matériau granulaire présente une valeur D₅₀ inférieure à 0,5 mm, de préférence inférieure à 0,25 mm, plus préférablement inférieure à 0,125 mm et, de manière encore plus préférable, inférieure à 0,063 mm.

7. Procédé selon l'une quelconque des revendications 1 à 6, **caractérisé en ce que**, lors de l'agglomération dudit matériau granulaire, celui-ci présente une teneur en humidité e d'au moins 2,0 % en poids, de préférence d'au moins 4,0 % en poids, plus préférablement d'au moins 6,0 % en poids et, de manière encore plus préférable, d'au moins 8,0 % en poids.

8. Procédé selon l'une quelconque des revendications 1 à 7, **caractérisé en ce que**, lors de l'agglomération dudit matériau granulaire, celui-ci présente une teneur en humidité inférieure à 25,0 % en poids, de préférence inférieure à 20,0 % en poids, plus préférablement inférieure à 18,0 % en poids et, de manière encore plus préférable, inférieure à 15,0 % en poids.

9. Procédé selon l'une quelconque des revendications 1 à 8, **caractérisé en ce qu'**après avoir aggloméré le matériau granulaire en lesdits morceaux plus gros, on laisse sécher les morceaux plus gros à l'air, éventuellement enrichi en dioxyde de carbone.

10. Procédé selon l'une quelconque des revendications 1 à 9, **caractérisé en ce que** lesdits morceaux plus gros sont obtenus par granulation dudit matériau granulaire.

11. Procédé selon l'une quelconque des revendications 1 à 9, **caractérisé en ce que** lesdits morceaux plus gros sont obtenus par briquetage dudit matériau granulaire.

12. Procédé selon la revendication 11, **caractérisé en ce que** lesdits morceaux plus gros sont briquetés avec une pression de compactage d'au moins 3,0 MPa, de préférence d'au moins 4,0 MPa et, de manière plus préférentielle, d'au moins 5,0 MPa, ladite pression de compactage étant de préférence inférieure à 10,0 MPa, et de manière plus préférentielle inférieure à 9,0 MPa.

13. Procédé selon l'une quelconque des revendications 1 à 12, **caractérisé en ce que** lesdites différentes fractions dans lesquelles les revêtements réfractaires démantelés sont séparés comprennent une fraction d'agrégats supplémentaire, dont au moins une partie est introduite en tant que l'un desdits agents de formation de laitier EAF ou agents de formation de laitier OD dans ledit four à arc électrique (1) ou dans ladite cuve d'affinage (7), ladite fraction d'agrégats supplémentaire présentant de préférence une granulométrie supérieure à 5,0 mm, de préférence supérieure à 7,5 mm et, de manière encore plus préférable, supérieure à 10,0 mm.

14. Procédé selon l'une quelconque des revendications 1 à 13, **caractérisé en ce qu'**après avoir aggloméré le matériau granulaire en lesdits morceaux plus gros, au moins 0,2 % en poids, de préférence au moins 0,4 % en poids, de carbonates sont formés dans les morceaux plus gros avant qu'ils ne soient introduits dans le four à arc électrique (1) ou dans la cuve d'affinage (7).
